# EUROPÄISCHE PATENTSCHRIFT

(11) **EP 2 351 992 B1**
(45) Veröffentlichungstag und Bekanntmachung des Hinweises auf die Patenterteilung: **11.01.2017**
(21) Anmeldenummer: 10000984.4
(22) Anmeldetag: 01.02.2010
(51) Int. Cl.: G01D 5/48, G01K 7/32, G01K 11/26, G01L 3/10, G01L 9/00

(54) **Verfahren und Anordnung zur berührungsfreien Messung physikalischer Parameter an bewegten Teilen in elektrischen Maschinen**
Method and assembly for contactless measurement of physical parameters on mobile parts of electric machines
Procédé et agencement de mesure sans contact de paramètres physiques sur des pièces mobiles de machines électriques

(43) Veröffentlichungstag der Anmeldung: 03.08.2011
(73) Patentinhaber: CTR Carinthian Tech Research AG, 9524 Villach/St. Magdalen (AT); Siemens Aktiengesellschaft, 80333 München (DE)
(72) Erfinder: Bethge, Andreas, 13587 Berlin (DE); Walter, Hartmut, 10961 Berlin (DE); Binder, Alfred, 9523 Landskron (AT); Fachberger, Rene, 9500 Villach (AT)
(74) Vertreter: Beer & Partner Patentanwälte KG

(56) Entgegenhaltungen:
- FR-A1- 2 906 421
- US-A1- 2007 107 519
- LEONHARD M. REINDL: "SAW-Based Radio Tag and Sensor Systems" PROC. INTERNATIONAL CONFERENCE ON NEW PIEZOELECTRIC MATERIALS AND HIGH PERFORMANCE ACOUSTIC WAVE DEVICES, 29. Januar 2002 (2002-01-29), Seiten 71-78, XP002593134
- R. STEINDL: "Passive surface acoustic wave sensors for temperature and other measurands" PROCEEDINGS OF TEMPMEKO '99, 3. Juni 1999 (1999-06-03), Seiten 424-429, XP002593135
- REINDL L ET AL: "SAW devices as wireless passive sensors" ULTRASONICS SYMPOSIUM, 1996. PROCEEDINGS., 1996 IEEE SAN ANTONIO, TX, USA 3-6 NOV. 1996, IEEE, NEW YORK, NY, USA LNKD- DOI:10.1109/ULTSYM.1996.583993, Bd. 1, 3. November 1996 (1996-11-03), Seiten 363-367, XP010217902 ISBN: 978-0-7803-3615-5

## Beschreibung

Die Erfindung betrifft ein Verfahren sowie eine Anordnung zur zuverlässigen, berührungsfreien Messung der Temperatur und/oder anderer physikalischer Größen an bewegten Teilen im Inneren von elektrischen Maschinen.

In der Entwicklung wie auch im Betrieb elektrischer Maschinen, beispielsweise ein- oder mehrphasiger Wechselspannungsmotoren bzw. -generatoren, ist die kontinuierliche Echtzeit-Verfolgung charakteristischer Betriebsparameter von hohem praktischem Interesse. Zu den relevanten Größen zählen, neben routinemäßig erfassten Parametern wie Strom/Spannung und Drehzahl, insbesonders die Temperatur(en) im Maschineninneren, etwa im Läufer, oder/und Drehmomente, z.B. an der Maschinenwelle. Diese Parameter können in Folge in bekannter Weise sowohl in der Systementwicklung und -optimierung als auch zur Überwachung und Regelung der Maschine im Betrieb verwendet werden. Dies ist insbesonders in elektrischen Großmaschinen mit einer Nennleistung von 100 kW und mehr von hoher Relevanz. Somit ist hier ein beträchtliches technisches wie kommerzielles Interesse an zuverlässigen Lösungen gegeben.

Während physikalische Parameter in stationären Bauteilen mit Standardmethoden, wie Thermoelementen, etc., einfach und zuverlässig erfasst werden können, existiert für die Messung von Temperaturen und/oder mechanischen Belastungen an rotierenden Teilen innerhalb von elektrischen Maschinen bislang keine technisch vollständig zufriedenstellende Lösung.

Es ist Stand der Technik, mechanische Belastungen wie auch Temperaturen mit Hilfe kabelgebundener Sensoren zu erfassen; dies bedingt für rotierende bzw. sonstig bewegte Teile eine Signalübertragung über Schleif(ring)kontakte. Obwohl diese den Einsatz eines weiten Bereichs unterschiedlicher Messmittel ermöglichen, unterliegen Schleifkontakte diversen praktischen Beschränkungen. Wesentlich sind der Platzbedarf, insbesonders in Folge der erforderlichen Abschirmung der Schleifkontakte gegen Interferenzen durch die in elektrischen Maschinen auftretenden Felder, die verschleißbedingt begrenzte Lebensdauer sowie Limitationen der zulässigen Relativgeschwindigkeit/Drehzahl und/oder Betriebstemperatur.

Eine vorteilhafte Alternative dazu stellen berührungsfreie Messverfahren dar.

Für die Temperaturmessung kommt zunächst die Messung mittels pyrometrischer Verfahren in Betracht. Obwohl, beispielsweise über Faseroptiken, gut integrierbar, ist diese Messmethode auf optisch zugängliche Oberflächen beschränkt; Messungen im Inneren z.B. eines Kurzschlussläufers sind so nicht möglich, und Einbauten wie auch Reflexionen im Inneren stellen ein beträchtliches praktisches Problem dar.

Eine weitere verbreitete Möglichkeit zur berührungsfreien Messung ist die Verwendung von Funksensoren. Derartige Systeme sind standardmäßig für alle relevanten Messparameter verfügbar, zumeist in wahlweise aktiver oder passiver Form. Im Gegensatz zu optischen Verfahren kann mit Funksensoren auch durch nicht-metallische Einbauten, wie sie häufig beispielsweise zur Belüftung bzw. Kühlluftführung verwendet werden, hindurch gemessen werden. Ein wesentlich die Anwendbarkeit von Standard-Funksensoren limitierender Faktor ist hier die zulässige Betriebstemperatur. Halbleiterbasierte Sensoren sind typischerweise auf Dauergebrauchstemperaturen ≤ 125°C beschränkt, wohingegen in elektrischen Leistungsmaschinen im Betrieb Temperaturen von 200°C und mehr auftreten können.

Ein möglicher Ansatz für derartige Hochtemperatur-Applikationen ist die Verwendung von SAW (Surface Acoustic Wave, akustische Oberflächenwellen) Sensoren. Diese können zur Messung von Temperaturen, mechanischen Spannungen und/oder Drehmomenten verwendet werden, sind passiv funkabfragbar, und bei entsprechender Ausführung für Dauergebrauchstemperaturen von 300°C und mehr geeignet. Aus der Literatur, unter anderem A. Pohl et al., Proc. 16th IEEE Instrum. & Meas. Techn. Conf., Vol. 3, S. 1728 ff (1999), sind verschiedene derartige Sensoren bekannt, die auch zur Messung an bewegten Teilen geeignet sind. Es kommen dabei zwei unterschiedlichen Design-Prinzipien zur Anwendung: SAW-Sensoren vom Resonator-Typ und solche, die auf reflektiven Verzögerungsleitungen (reflective delay lines, RDL-Typ) basieren.

Resonator-basierte SAW-Sensoren sind die einfachere und vielfach kostengünstigere Option, und dominieren aus diesen Gründen die SAW-Sensoranwendungen. Entsprechende Sensoren wurden und werden erfolgreich zur Messung physikalischer Parameter an rotierenden Teilen benutzt, insbesonders zur Messung des Reifendrucks, wie unter anderem in DE-C2 100 570 59, US-B2 6,651,495 und EP-B1 1 491 476 dargelegt. Es ist aus EP-B1 1 081 845 ebenfalls bekannt, SAW-Sensoren vom Resonatortyp (vgl. Absätze [0021] und [0051] sowie Anspruch 5) zur Messung physikalischer Parameter in elektrischen Motoren zu verwenden.

Resonator-Typ SAW-Sensoren haben zwei wesentliche Vorteile. Zunächst ermöglicht das Abfrageprinzip, das in einem schmalen Frequenzband um eine vordefinierte Resonanzfrequenz operiert, Abfragezeiten im niedrigen ms-Bereich. Damit wird es möglich, auch rasch bewegte Teile beim Durchgang durch einen Funkkegel zu messen. Zweitens erlaubt die hohe Frequenzselektivität derartiger Systeme eine Trennung nahe liegender Resonanzen. Dies ermöglicht eine parallele Abfrage multipler SAW-Resonatoren bei verschiedenen Frequenzen, wie beispielsweise in EP-B1 1 081 845 Absatz [0051] implizit dargelegt. Somit sind derartige Systeme gut für berührungsfreie Messungen an drehenden oder sonstwie rasch bewegten Teilen geeignet, auch bei hohen Umgebungstemperaturen.

Das Dokument "SAW-Based Radio Tag and Sensor Systems" von L Reindl vom 29.01.2002 offenbart ein Verfahren und eine Anordnung gemäß den Stand der Technik.

Ein praktisches Problem von SAW-Sensoren des Resonator-Typs ist die für Absolutmessungen zwingend erforderliche Kalibrierung. Die bei der Resonator-Messung ausgewertete Resonanzverschiebung des SAW-Elements wird bei berührungsfreier Messung von aus der Funkstrecke resultierenden Frequenzverschiebungen überlagert; deren Übertragungscharakteristik beeinflussende Faktoren, wie beispielsweise naheliegende metallische Oberflächen, dielektrische Einbauten (z.B. Lüfterflügel), etc., leisten somit unmittelbar einen Beitrag zur gemessenen Gesamt-Frequenzverschiebung. Dies äußert sich unmittelbar in einer Verstimmung des Sensorsignals. Für eine korrekte Messung ist es somit nötig, SAW-Sensoren des Resonator-Typs *in-situ,* d.h. im Anwendungsszenario oder einem dazu baugleichen Kalibrationsaufbau, zu kalibrieren. Der damit verbundene Aufwand limitiert derartige Sensoren im Wesentlichen auf Massen-Anwendungen in (weitgehend) identen Umgebungen, wie beispielsweise die Messung des Reifendrucks. Anwendungen mit geringeren Stückzahlen und/oder variablen Umgebungsbedingungen sind nach diesem Ansatz kaum ökonomisch realisierbar, was sich auch in der technischen Verbreitung derartiger Sensorsysteme widerspiegelt.

Das zweite für die beabsichtigten Anwendungen wesentliche Problem von Resonator-Typ SAW-Sensoren ist deren Störanfälligkeit gegenüber elektromagnetischen Interferenzen, wie sie im Inneren elektrischer Maschinen zwangsläufig auftreten. Diese bedingen in der Praxis signifikante Beeinträchtigungen der erzielbaren Messgenauigkeiten, die unter Umständen bis zu einem Totalausfall des Sensorsystems führen können.

SAW-Sensoren vom Resonatortyp stellen somit nach derzeitigem Stand keine ausreichend zuverlässige, praktikable Lösung für das gegenständliche technische Problem dar. Als Alternative kommen auf reflektiven Verzögerungsleitungen basierende SAW-Sensoren in Betracht, die i) wesentlich weniger anfällig gegen elektromagnetische Interferenzen und ii) einfacher und zuverlässiger kalibrierbar sind.

Bei SAW-Sensoren des RDL-Typs wird über einen breiteren Frequenzbereich gemessen und die resultierenden Signale, beispielsweise mittels Fourier-Transformation, in die Zeitdomäne überführt. Dies erlaubt den Einsatz entsprechender Signalverarbeitungs-Algorithmen, die auch Interferenzkorrekturen umfassen können. Während elektromagnetische Wellen, und somit auch Interferenzen, durch übliche Zeitkonstanten im ps- bis ns-Bereich charakterisiert sind, weisen die elektroakustischen SAW-Sensorsignale typische Zeitverzögerungen im µs-Bereich auf. Dies erlaubt eine Trennung von Nutz- und Störsignalen, und somit eine weitgehend störungsfreie, genaue Messung auch in elektromagnetisch stark belasteten Umgebungen.

Der zweite praktisch wesentliche Vorteil von RDL-SAW-Sensoren ist, dass diese unabhängig von der Anwendung präzise kalibrierbar sind. Durch Signalauswertung in der Zeitdomäne sind die Sensorsignale prinzipiell wenig anfällig auf überlagerte Störsignale in der Frequenzdomäne. Zur zusätzlichen Verbesserung der Messsicherheit werden SAW-Elemente des RDL-Typs mit zumindest zwei getrennten, jeweils an Beginn und Ende der Verzögerungsstrecke (Delay Line) angeordneten Reflektormarken verwendet. Die Reflektormarke am Beginn der Verzögerungsstrecke dient dabei als Referenz, die zweite Marke in bekannter Art und Weise als Messmarke. Das Sensorsignal ist in dieser Anordnung in der relativen Zeitdifferenz der Reflektionsantworten enthalten; eine Verstimmung der Funkstrecke durch externe Faktoren kann zwar auftreten, wird aber durch die innere Referenzierung kompensiert. Eine weitere Verbesserung der Messgenauigkeit und der Datenzuverlässigkeit kann besonders vorteilhafterweise durch Verwendung einer, zwischen den beiden ersten Reflektormarken liegenden, dritten Reflektormarke erreicht werden. Dadurch entstehen multiple, miteinander korrelierte Sensorsignale, die in Folge in geeigneter Art und Weise ausgewertet werden können. Basierend darauf können RDL-SAW-Sensoren mit zumindest zwei Reflektormarken einheitlich erstkalibriert und, weitgehend unabhängig von den Anwendungsbedingungen, zuverlässig für verschiedene Applikationen verwendet werden. Dies stellt einen beträchtlichen praktischen und kommerziellen Vorteil derartiger Systeme insbesonders für Anwendungen mit variablen Anforderungen und/oder kleineren Stückzahlen dar.

Die Verwendung von SAW-Sensoren des RDL-Typs zur Messung an bewegten Teilen ist per se vorbekannt, gilt allerdings gemäß dem Stand der Technik als nur eingeschränkt und mit beträchtlichem Aufwand für die Messung rasch bewegter Teile geeignet. Das Kernproblem ist die erforderliche Messzeit. Das übliche Leseverfahren verwendet ein schrittweise frequenzmoduliertes Dauerstrich- (FSCW, frequency stepped continuous wave) Radarsignal. Derartige Lesezyklen dauern typischerweise > 30 ms und sind somit um etwa 2 Größenordnungen zu langsam für das Auslesen z.B. eines auf einer mit praktisch relevanten Drehzahlen rotierenden Welle umlaufenden SAW-Sensors während des Durchgangs durch einen üblichen Sende/Empfangskegel eines Lesegeräts.

Als Abhilfe wird für rotierende Bauteile in Scholl et al., Proc. IEEE Int. Freq. Control Symp., S. 595 ff. (1998) sowie diversen verwandten Publikationen vorgeschlagen, sensor- und/oder lesegerätseitig Schleifenantennen (Loop-Antennen) zu verwenden. Dabei kommen wahlweise axiale oder radiale Anordnungen zur Anwendung, in denen die Schleifenantennen sensorseitig, lesegeräteseitig oder beidseitig angeordnet sind. Diese Lösung bewirkt, dass sich der SAW-Sensor permanent im Sende/Lesebereich befindet, wodurch das Auslesen des SAW-Sensors trotz Rotationsbewegung mit den standardmäßig verwendeten SAW-Leseverfahren möglich ist. Allerdings erweisen sich derartige Anordnungen in der Realität als wenig praxistauglich. Neben einem komplexen und somit teueren Aufbau ist, insbesonders bei größeren Bauformen, das Abstrahlverhalten von Schleifenantennen problematisch: die Sendeleistung verteilt sich relativ ungerichtet über einen großen Bereich, worunter das Signal/Rausch-Verhältnis und somit die erzielbaren Sende/Lesedistanzen leiden; typische Übertragungsdistanzen betragen nur wenige cm. Zudem ist eine Trennung von lesegerätseitiger Sende- und Empfangsantenne zur Verbesserung der Signalqualität nicht möglich, und es ist insbesonders bei rasch rotierenden Bauteilen unvorteilhaft und technisch aufwändig, Antennenschleifen in rotierende Bauteile zu integrieren.

Insgesamt ergibt sich aus dem Stand der Technik somit keine zufriedenstellende Lösung für das gegenständliche technische Problem. Hier will die vorliegende Erfindung Abhilfe schaffen.

Zur Lösung dieser Aufgabe wird erfindungsgemäß zunächst vorgeschlagen, SAW-Sensoren des RDL-Typs, d.h. auf dem Prinzip der reflektiven Verzögerungsleitung beruhende akustische Oberflächenwellensensoren mit mindestens zwei, vorzugsweise drei oder mehr Reflektormarken zu verwenden, und diese mit Hilfe eines kontinuierlich frequenzmodulierten Dauerstrich-Radarsignals (FMCW Radar) mit einer Auslesedauer ≤ 1000 µs, vorzugsweise ≤ 100 µs, beim Durchgang durch einen räumlich lokalisierten Lesebereich auszulesen. Durch diese Lösung wird erstmals die zuverlässige berührungsfreie Messung verschiedener physikalischer Parameter, wie insbesonders der Temperatur und/oder mechanischer Spannungen bzw. Drehmomente, an bewegten Teilen im Inneren elektrischer Maschinen möglich, bei denen die auftretenden Temperaturen den Einsatz halbleiterbasierter Systeme nicht erlauben.

Die praktische Umsetzung der Erfindung wird anhand nachfolgender schematischer Zeichnungen erläutert, die weiters besonders vorteilhafte Ausführungsformen und Anwendungsszenarien derartiger Sensorsysteme illustrieren.

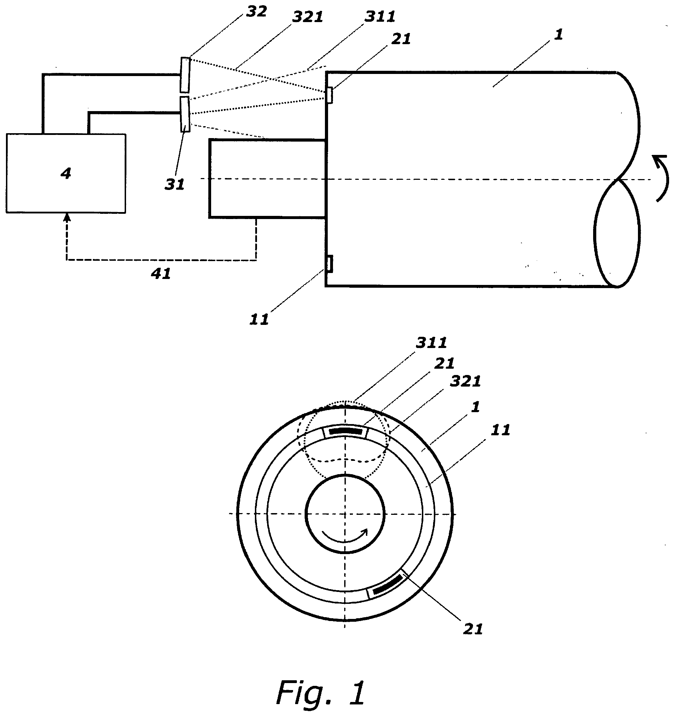

Fig. 1 zeigt eine prinzipielle Anordnung zur Durchführung des erfindungsgemäßen Verfahrens für eine axiale Messanordnung mit getrennter Sende- (31) und Empfangsantenne (32), zwei in eine axiale Nut (11) des Läufers (1) eingebauten SAW-Sensormarken (21) und Kopplung eines Triggersignals (41) an die Steuerung des Hochgeschwindigkeits-FMCW-Lesegeräts (4), in einer seitlichen und einer axialen Ansicht.

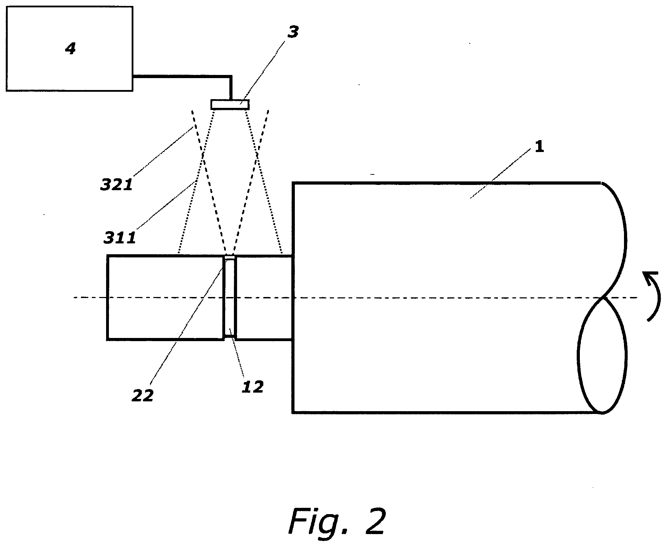

Fig. 2 zeigt eine prinzipielle Anordnung zur Durchführung des erfindungsgemäßen Verfahrens für eine radiale Messanordnung mit gemeinsamer Sende/Leseantenne (3) und eine einzelne, in eine radiale Nut (12) der Läuferwelle eingebaute SAW-Sensormarke (22), in einer seitlichen Ansicht.

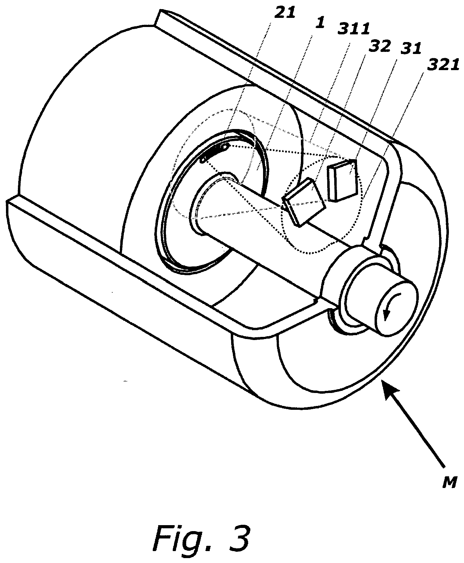

Fig. 3 zeigt ein Einbaubeispiel eines mittels getrennten Sende- und Empfangsantennen (31, 32) axial abgefragten, in die Frontseite des Läufers (1) einer elektrischen Maschine (M) integrierten SAW-Sensors (21) in einer Ausführungsform zur Messung der Läufertemperatur, in einer dreidimensionalen Projektion.

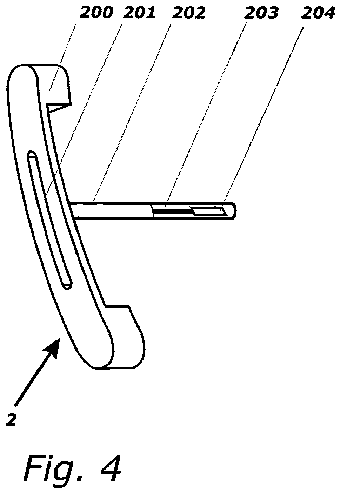

Fig. 4 zeigt eine vorzugsweise Ausführungsform einer SAW-Sensormarke (2) zur Messung der Temperatur im Inneren eines rotierenden Bauteils, beispielsweise eines Kurzschlussläufers, mit zum Einbau in eine axiale Vertiefung, wie insbesonders einer (Wucht-)Nut geeigneter Schlitzantenne (201) und davon räumlich separiertem signalerzeugendem Sensorelement (204), in einer dreidimensionalen Projektion.

Die Abfrage von SAW-Elementen des RDL-Typs nach dem FMCW-Prinzip ist ansich bekannt, galt aber bislang aus Gründen der Messzeit als für rasche Lesezyklen kleiner einige 10 ms nicht einsetzbar und wurde aus diesen Gründen für die gegenständlichen Anwendungen nicht in Betracht gezogen. Im Rahmen der der gegenständlichen Erfindung zugrundeliegenden Forschung wurde festgestellt, dass es möglich ist, das FMCW-Prinzip durch Verwendung spezieller elektronischer Baugruppen und -elemente derart zu beschleunigen, dass der komplette Sende/Lesezyklus eines SAW-(Sensor)Elements des RDL-Typs in deutlich unter 1 ms abgeschlossen werden kann. Damit wird diese Technologie für die gegenständliche Anwendung relevant.

Anders als bei vorbekannten RDL-SAW-Systemen wird ein in (rascher) Bewegung befindlicher SAW-Sensor (21, 22) in der erfindungsgemäßen Anordnung nicht permanent, sondern nur innerhalb eines bestimmten Lesebereichs abgefragt. Die Verwendung von RDL-SAW-Sensormarken gewährleistet die erforderliche hohe Betriebssicherheit auch in elektromagnetisch belasteten Umgebungen, und die ultrakurzen Messpulse des FMCW ermöglichen es erstmals, den kompletten Lesezyklus derartiger Elemente innerhalb eines Sensordurchgangs durch ein begrenztes Antennenfeld der Sende- bzw. Empfangsantenne des Lesegeräts abzuwickeln.

Der Lesebereich ergibt sich aus der zeitlich-räumlichen Überdeckung des Emissionsfelds (311) der Sendeantenne (3, 31) mit der Antenne des Sensors (21) sowie des Emissionsfelds der Sensorantenne (321) mit der Empfangsantenne (3, 32). Zur Messung in einer derartigen Anordnung ist es erforderlich, dass die erforderliche Zeit zum Auslesen des SAW-Sensors deutlich kleiner als die Verweilzeit des Sensors im jeweiligen Funkbereich ist. Dies wird durch die erfindungsgemäße Lösung ermöglicht. Bedingt durch die mit Hilfe des FMCW-Prinzips realisierbaren ultraschnellen Lesezyklen < 1000 µs, vorzugsweise < 100 µs, sind Messungen bei Drehzahlen von 10.000 U/min und mehr möglich, was mit vorbekannten Verfahren kaum realisierbar ist.

Als zusätzlicher Vorteil ist es mit Hilfe des erfindungsgemäßen Verfahrens möglich, multiple SAW-Sensoren frei von Kreuzinterferenzen nacheinander beim Durchgang durch den Lesebereich abzufragen. Unter der Voraussetzung, dass sich die Lesebereiche der einzelnen Sensoren gegenseitig nicht überschneiden, ist damit die Messung an verschiedenen Orten und/oder von verschiedenen Parametern durch eine einzelne Lese/Empfangseinheit (4) möglich.

Das Verfahren ist für sämtliche im Bereich der SAW-Sensortechnik üblichen Frequenzen anwendbar. Als besonders vorteilhaft hat sich das freie ISM-Band bei 2,45 GHz erwiesen. Die Verwendung von UHF-Frequenzen ermöglicht die Verwendung kompakter, energieeffizienter Antennen mit guter Richtwirkung. Somit ist bei deutlich kleinerer Bauform eine wesentlich größere Übertragungsreichweise realisierbar, als es bei den im SAW-Bereich sonst üblicherweise verwendeten Frequenzen < 1 GHz möglich wäre.

Bei Verwendung des erfindungsgemäßen Verfahrens können Art und Form der Antennen flexibel an die Anforderungen der Anwendung angepasst werden. Dies erlaubt beispielsweise die Verwendung kostengünstiger Standard-Antennen, vorzugsweise mit für den Anwendungsfall optimierter Größe und Abstrahlverhalten (Form des Sendekegels, Antennen-Gain, etc.), als lesegerätseitige Sende- und/oder Empfangsantennen (3, 31, 32). Dabei ist es wahlweise möglich, zur Optimierung der Signalqualität zwei getrennte Antennen als Sende- (31) und Empfangsantenne (32) zu verwenden, oder, beispielsweise aus Platzgründen, eine einzelne Antenne als gemeinsame Sende/Empfangsantenne (3) einzusetzen. Im zweiten Fall ist dabei im Lesegerät ein geeignetes direktives Element (Circulator) zur Signaltrennung vorzusehen.

Ebenso ist es durch Einsatz des erfindungsgemäßen Verfahrens in höchst vorteilhafter Art und Weise möglich, die sensorseitigen Antennen flexibel an die Anforderungen der Anwendung und die Einbaubedingungen, z.B. die Reflexionseigenschaften der unmittelbaren Sensorumgebung, anzupassen. Dies ist exemplarisch in Fig. 4 gezeigt: die sensorseitige Antenne ist hier als Schlitzantenne (201) ausgeführt, die nach Bedarf bündig oder auch versenkt in eine metallische Oberfläche integriert werden kann. Der resultierende Gleichstrom-Kurzschluss in der Schlitzantenne bewirkt einen ESD-Schutz des Sensorelements und erhöht dadurch die Betriebssicherheit in elektromagnetisch belasteten Umgebungen.

Ein wesentlicher Vorteil des FMCW-Prinzips ist die, im Vergleich zu alternativen Verfahren, gute Energiebilanz, die eine berührungsfreie passive Messung über vergleichsweise große Distanzen und/oder unter komplexen Umgebungsbedingungen, wie sie z.B. die als Hohlraumresonator agierende metallische Umgebung im Inneren einer elektrischen Maschine darstellt, ermöglicht. Durch geeignete Systemoptimierung sind Sende/Lesedistanzen von bis zu 1 m erreichbar. In Kombination mit der Verwendung nahezu beliebiger, anwendungsspezifisch optimierbarer Antennen, ermöglicht dies auch eine Nachrüstung existierender Anlagen ohne konstruktive Änderungen an der elektrischen Maschine selbst.

Nach dem erfindungsgemäßen Prinzip ist es möglich, SAW-Sensoren für beliebige, mit Hilfe von SAW-Sensoren des RDL-Typs erfassbare physikalische Größen abzufragen. Fig. 2 zeigt exemplarisch eine vorzugsweise Ausführungsform zur Messung von auf die Rotorwelle einwirkenden Dreh- bzw. Torsionsmomenten dar. Der entsprechende SAW-Sensor (22) ist im gezeigten Beispiel in eine radiale Nut eingebaut; analog wäre ein Einbau in ein Langloch oder eine beliebige andere, kraftübertragende Form der Befestigung möglich.

Eine besonders vorteilhafte Ausführungsform eines Temperatursensors für den Einbau in eine axiale Vertiefung, beispielsweise eine (Wucht-)Nut eines Rotors (1) ist in Fig. 4 dargestellt. Die Sensormarke ist in diesem Ausführungsbeispiel in Form eines Wuchtelements (200) ausgeführt, was einen einfachen Einbau ohne zusätzlichen Platzbedarf in eine vorhandene Wuchtnut (11) ermöglicht. Das zusätzliche Gewicht des Sensors kann dadurch auf einfache, besonders vorteilhafte Art und Weise durch entsprechende Wuchtgewichte kompensiert werden, was insbesonders bei hochdrehenden Rotoren wesentlich ist. In der hier exemplarisch gezeigten Ausführungsform zur Messung der Temperatur im Läuferinneren, beispielsweise im Kurzschlusskäfig einer Drehstrommaschine, ist das signalerzeugende SAW-Sensorelement (204) zudem räumlich von der sensorseitigen Antenne (201) getrennt. Umgeben von einem thermisch leitfähigen Schutzmantel (202) misst das Sensorelement somit die gefragte physikalische Größe in-situ und ist trotzdem berührungsfrei funkabfragbar. Die erforderliche Übertragung der elektrischen Signale von und zur integrierten Schlitzantenne (201) erfolgt beispielsweise über einen integrierten Coaxialleiter (203).

Die Möglichkeit, in Analogie dazu weitere anwendungsspezifisch optimierte Ausführungsformen von RDL-SAW-Sensormarken zur Verwendung mit dem erfindungsgemäßen Verfahren zu entwickeln und einzusetzen, ist für den Fachmann offensichtlich.

Der erfindungsgemäß zur Sensor-Abfrage eingesetzte ultrakurze FMCW-Messzyklus ermöglicht die Anwendung verschiedener, je Applikation nach besonders vorteilhafter Verfahren zur Sensorabfrage und/oder Interferenzkorrektur.

Eine erste Möglichkeit zur Messung der Sensorsignale ist eine permanente Abfrage des Sensors; die Sensorsignale werden in Folge im Rahmen eines Daten-Post-Processings vom Hintergrund getrennt und ausgewertet. Das Verfahren setzt gute Signal/Rauschverhältnisse voraus und ist wenig energieeffizient, aber mit minimalem Aufwand implementierbar.

Eine zweite Möglichkeit zur Messung der Sensorsignale ist die getriggerte Auslösung zumindest eines ultrakurzen FMCW-Messzyklus nach Eintritt eines Sensors bzw. dessen Antenne in den Lesebereich. Voraussetzung dafür ist ein Triggersignal (41), das in einer bekannten Lagebeziehung zur Lage des/der Sensorantenne(n) steht. Dies kann in vielen elektrischen Maschinen durch Auswertung der Datenpulse der Drehzahlüberwachung erfolgen; alternativ kann auch ein eigener Trigger installiert werden. Diese Vorgangsweise ist besonders energieeffizient und liefert insbesonders bei hohen Drehzahlen und/oder schlechteren Signal/Rausch-Verhältnissen bessere Ergebnisse als die permanente Abfrage.

Insbesonders bei niedrigeren Drehzahlen, bei denen sich die Sende/Lesefelder ausreichend lange überlagern um zwei oder mehrere Messungen innerhalb eines Durchgangs zu ermöglichen, ist es in einer Weiterentwicklung dieses Ansatzes möglich, durch eine adaptive Triggerung auch drehzahlabhängig, eine Reihe von Einzelmessungen innerhalb des Durchgangs auslösen, um somit die verfügbare Messzeit pro Umdrehung bestmöglich zu nutzen. Diese können in Folge zur Verbesserung der Signalqualität korreliert weiterverarbeitet, im einfachsten Fall gemittelt, werden.

In einer vorteilhaften dritten Ausgestaltung der Messabfolge wird zusätzlich zum getriggerten Auslesen des oder der Sensor(en) zumindest ein Messzyklus gezielt zu einem Zeitpunkt ausgelöst, zu dem sich kein Sensor im Lesebereich befindet, und die dadurch gewonnenen Hintergrunddaten in Folge zur Interferenzkorrektur verwendet.

In jeder der genannten Ausgestaltungen der Sensorabfrage können die erhaltenen SAW-Signale in Folge in geeigneter, für den Fachmann zur Genüge bekannter Art und Weise weiterbearbeitet und ausgewertet werden.

Ein abschließender weiterer Vorteil der erfindungsgemäßen Verwendung von SAW-Sensorelementen vom RDL-Typ und Auslesen mittels FMCW-Radarsignalen ist die Möglichkeit, in die Sensorsignale Identifikationscodes (ID-Codes) zu integrieren. Dies kann über die Aufbringung, je nach gewünschten Coderaum typischerweise zwei bis acht, zusätzlicher Reflektormarken auf dem SAW-Element erfolgen; die Position der einzelnen Marken ergibt einen individuellen ID-Code, der nach Art einer RF-ID Marke ausgelesen werden kann. Dieser Code kann nicht verändert und nur mit großem Aufwand kopiert werden und ermöglicht somit eine eindeutige Identifizierung des Sensors bzw. des damit versehenen Bauteils. Dies kann vorteilhafterweise als weitgehend fälschungssicheres Sicherheitsmerkmal, zur Garantieüberwachung und/oder Grundlage für die Wartungsplanung und -durchführung verwendet werden. Zudem kann der ID-Code auf einfache und besonders vorteilhafte Art und Weise dazu verwendet werden, sicherzustellen, dass die dem jeweiligen Sensorelement zugehörigen Kalibrationsdaten für die Sensordatenauswertung verwendet werden.

## Patentansprüche

1. Verfahren zur berührungsfreien Messung physikalischer Größen an bewegten Teilen im Inneren von elektrischen Maschinen, wobei
zumindest ein akustisches Oberflächenwellen-Sensorelement vom Typ reflektive Verzögerungsleitung ("reflective delay-line type SAW sensor element") mit zumindest zwei, vorzugsweise drei oder mehr Reflektormarken verwendet wird, von denen zumindest eine als Referenz- und zumindest eine zweite als Messmarke für die zu messende physikalische Größe fungiert, und wobei das akustische Oberflächenwellen-Sensorelement vom Typ reflektive Verzögerungsleitung ("reflective delay-line type SAW sensor element") beim Durchgang des Sensors durch einen, durch temporale Überlappung des Sende/Empfangsbereichs einer sensorseitigen Antenne mit einer lesegerätseitigen Antennenanordnung gebildeten, räumlich lokalisierten Lesebereich durch ein kontinuierlich frequenzmoduliertes Dauerstrich (FMCW)-Radarsignal mit einer Dauer ≤ 1000 µs, vorzugsweise ≤ 100 µs, ausgelesen wird, **dadurch gekennzeichnet, dass** die Messung durch ein in bekannter Lagerelation zu dem oder den sensorseitigen Antenne(n), nämlich die Schlitzantenne (201), stehendes Triggersignal (41) so ausgelöst wird, dass während des Durchgangs eines Sensorelements durch den lokalisierten Lesebereich zumindest ein vollständiger Messzyklus stattfindet, dessen Daten in Folge ausgewertet werden.

2. Verfahren nach Anspruch 1, **dadurch gekennzeichnet, dass** es sich bei den gemessenen physikalischen Größen um Temperatur(en), Drehmoment(e) und/oder mechanische Spannung(en) handelt.

3. Verfahren nach Anspruch 1 oder 2, **dadurch gekennzeichnet, dass** es sich bei den elektrischen Maschinen um ein-oder mehrphasige Elektromotore oder ein- oder mehrphasige Generatoren handelt.

4. Verfahren nach Anspruch 3, **dadurch gekennzeichnet, dass** die elektrischen Maschinen eine Nennleistung von größer oder gleich 100 kW aufweisen.

5. Verfahren nach Anspruch 3 oder 4, **dadurch gekennzeichnet, dass** die erhaltenen Sensormessdaten in Echtzeit zur Überwachung und/oder Regelung der elektrischen Maschine verwendet werden.

6. Verfahren nach einem der Ansprüche 1 bis 5, **dadurch gekennzeichnet, dass** eine die permanente Abfrage des Sensors erfolgt, und dass die bei Durchgang der sensorseitigen Antenne durch den Lesebereich erhaltenen Sensormessdaten in einem Post-Processing-Schritt von den, zu Zeiten, bei denen kein Sensorelement im Lesebereich präsent ist, erhaltenen Hintergrunddaten getrennt und ausgewertet werden.

7. Verfahren nach Anspruch1, **dadurch gekennzeichnet, dass** während eines Durchgangs eines Sensorelements durch den lokalisierten Lesebereich zwei oder mehr Messzyklen stattfinden, deren Daten in Folge in geeigneter Art und Weise in Korrelation gebracht und ausgewertet werden.

8. Verfahren nach Anspruch 1, **dadurch gekennzeichnet, dass** zusätzlich zumindest ein Messzyklus zu einem Zeitpunkt ausgelöst wird, zu dem sich kein Sensorelement im Lesebereich befindet, und dass die so gewonnenen Daten zur Interferenzkorrektur verwendet werden.

9. Verfahren nach Anspruch 1, **dadurch gekennzeichnet, dass** die akustischen Oberflächenwellen-Sensorelemente vom Typ reflektive Verzögerungsleitung ("reflective delay-line type SAW sensor element") jeweils zumindest drei, vorzugsweise vier bis zehn Reflektormarken aufweisen, die auf dem SAW-Element so angeordnet sind, dass sie im Leseprozess einen von SAW-Element zu SAW-Element unterschiedlichen Identifikationscode ergeben, der gemeinsam mit den Sensormessdaten durch ein kontinuierlich frequenzmoduliertes Dauerstrich (FMCW)-Radarsignal mit einer Dauer ≤ 1000 µs, vorzugsweise ≤ 100 µs, ausgelesen wird.

10. Verfahren nach Anspruch 9, **dadurch gekennzeichnet, dass** die Identifikationscodes zur Zuordnung von Kalibrationsdaten zu einzelnen SAW-Sensoren und/oder als schwer fälschbares Sicherheitsmerkmal, beispielsweise zur Garantieüberwachung, und/oder als Grundlage für die Anlagenwartung verwendet werden.

11. Anordnung zur berührungsfreien Messung physikalischer Größen an bewegten Teilen im Inneren von elektrischen Maschinen, wobei
zumindest ein akustisches Oberflächenwellen-Sensorelement vom Typ reflektive Verzögerungsleitung ("reflective delay-line type SAW sensor element") mit zumindest zwei, vorzugsweise drei oder mehr Reflektormarken vorgesehen ist, welches auf einem zu überwachenden, bewegten bzw. rotierenden Bauteil angebracht bzw. in diesen integriert ist und elektrisch an eine, vorzugsweise ebenfalls in den Bauteil integrierte, sensorseitige Sende/Empfangsantenne angeschlossen ist, und wobei eine elektrisch mit einem Lesegerät verbundene Sende/Empfangsantennenanordnung vorgesehen ist, die durch Überlappung der jeweiligen Sende/Empfangsbereiche gemeinsam einen räumlich lokalisierten Lesebereich bildet, bei dessen Durchquerung jedes Sensorelement durch ein frequenzmoduliertes Dauerstrich (FMCW)-Radarsignal mit einer Dauer ≤ 1000 µs, vorzugsweise ≤ 100 µs, ausgelesen wird, **dadurch gekennzeichnet, dass** die sensorseitige Antenne als Schlitzantenne (201) ausgeführt ist, und dass die Sensormarke (22) insgesamt so gestaltet ist, dass sie bündig oder auch versenkt in eine Vertiefung, beispielsweise eine axiale Nut, vorzugsweise eine Wuchtnut (11) des zu überwachenden rotierenden Objekts integriert ist.

12. Anordnung gemäß Anspruch 11, **gekennzeichnet durch** die Verwendung einer gemeinsamen lesegerätseitigen Sende- und Empfangsantenne in Kombination mit einem vorzugsweise im Lesegerät integrierten, direktiven Element zur Separation von Sendesignalen und empfangenen Sensorsignalen.

13. Anordnung gemäß Anspruch 11, **gekennzeichnet durch** die Verwendung von zwei getrennten Antennen als lesegerätseitige Sende- bzw. Empfangsantenne.

14. Anordnung gemäß zumindest einem der Ansprüche 11 bis 13, **dadurch gekennzeichnet, dass** die verwendeten Antennen und das akustische Oberflächenwellen-Sensorelement vom Typ reflektive Verzögerungsleitung ("reflective delay-line type SAW sensor element") auf den Betrieb im freien ISM-Band 2,40 - 2,50 GHz ausgelegt sind.

15. Anordnung gemäß einem der Ansprüche 11 bis 14 in einer Ausführungsform zur Messung mit mehreren Oberflächenwellen-Sensorelementen, **dadurch gekennzeichnet, dass** zumindest zwei Sensoren verwendet und so angeordnet sind, dass sie sequentiell den Sende/Empfangsbereich des Lesegeräts durchlaufen, sodass sich die Lesebereiche dabei nicht gegenseitig überschneiden.

16. Anordnung gemäß Anspruch 11 in einer Ausführungsform zur Messung der Temperatur im Inneren eines rotierenden Objekts einer elektrischen Maschine, **dadurch gekennzeichnet, dass** das signalerzeugende akustische Oberflächenwellen-Sensorelement vom Typ reflektive Verzögerungsleitung ("reflective delay-line type SAW sensor element") und die diesem zugehörige sensorseitige Antenne räumlich getrennt angeordnet sind, sodass sich das signalerzeugende Element am gewünschten Messpunkt im Inneren eines Kurzschlussläufers befindet und elektrisch in geeigneter Art und Weise, vorzugsweise mittels Coaxialleiter, mit der an geeigneter Stelle funkzugänglich angeordneten sensorseitige Antenne verbunden ist.

## Claims

1. Method for the contactless measurement of physical parameters on mobile parts in the interior of electric machines, wherein
at least one surface acoustic wave sensor element of the reflective delay-line type ("reflective delay-line type SAW sensor element") with at least two reflective markers, preferably three or more reflective markers, is used, wherein at least one of said reflective markers serves as reference marker and at least one second marker serves as measuring marker for the physical parameter to be measured, and wherein the surface acoustic wave sensor element of the reflective delay-line type ("reflective delay-line type SAW sensor element") is read out by means of a continuously frequency-modulated continuous wave (FMCW) radar signal with a duration ≤ 1000 µs, preferably ≤ 100 µs, while the sensor passes through a spatially localized reading area formed by temporally overlapping the transmitting/receiving area of a sensor-side antenna with a reader-side antenna array, **characterized in that** the measurement is initiated by a trigger signal (41), which is in known positional relation to the sensor-side antenna(s), namely the slot antenna (201), in such a way that at least one complete measuring cycle takes place while a sensor element passes through the localized reading area, wherein the data of said measuring cycle is subsequently evaluated.

2. Method according to claim 1, **characterized in that** the physical parameters to be measured are temperature(s), torque(s) and/or mechanical stress(es).

3. Method according to claim 1 or 2, **characterized in that** the electric machines are single-phase or multi-phase electric motors or single-phase or multi-phase generators.

4. Method according to claim 3, **characterized in that** the electric machines have a rated power greater than or equal to 100 kW.

5. Method according to claim 3 or 4, **characterized in that** the obtained sensor measuring data is used in real time for monitoring and/or controlling the electric machine.

6. Method according to one of claims 1 to 5, **characterized in that** the sensor is permanently sampled, and **in that** the sensor measuring data obtained while the sensor-side antenna passes through the reading area is in a post-processing step separated from the background data obtained at times, at which no sensor element is present in the reading area, and evaluated.

7. Method according to claim 1, **characterized in that** two or more measuring cycles take place while a sensor element passes through the localized reading area, wherein the data of said measuring cycles is subsequently correlated in a suitable fashion and evaluated.

8. Method according to claim 1, **characterized in that** at least one measuring cycle is additionally initiated at a time, at which no sensor element is located in the reading area, and **in that** the thusly obtained data is used for interference correction.

9. Method according to claim 1, **characterized in that** the surface acoustic wave sensor elements of the reflective delay-line type ("reflective delay-line type SAW sensor element") respectively feature at least three reflective markers, preferably four to ten reflective markers, wherein said reflective markers are arranged on the SAW element in such a way that they result in an identification code, which differs from SAW element to SAW element and is read out together with the sensor measuring data by means of a continuously frequency-modulated continuous wave (FMCW) radar signal with a duration ≤ 1000 µs, preferably ≤ 100 µs.

10. Method according to claim 9, **characterized in that** the identification codes are used for allocating calibration data to individual SAW sensors and/or as security feature that is difficult to falsify, e.g. for warranty monitoring, and/or as basis for the system maintenance.

11. Arrangement for the contactless measurement of physical parameters on mobile parts in the interior of electric machines, wherein
at least one surface acoustic wave sensor element of the reflective delay-line type ("reflective delay-line type SAW sensor element") with at least two reflective markers, preferably three or more reflective markers, is provided, wherein said sensor element is respectively arranged on or integrated into a moving or rotating component to be monitored and electrically connected to a sensor-side transmitting/receiving antenna, which is preferably also integrated into the component, wherein a transmitting/receiving antenna array is provided and electrically connected to a reader, wherein said antenna array forms a spatially localized reading area by mutually overlapping the respective transmitting/receiving areas, and wherein each sensor element is read out by means of a frequency-modulated continuous wave (FMCW) radar signal with a duration ≤ 1000 µs, preferably ≤ 100 µs, while it passes through said reading area, **characterized in that** the sensor-side antenna is realized in the form of a slot antenna (201), and **in that** the sensor marker (22) is altogether realized in such a way that it is integrated into a recess such as an axial groove, preferably a balancing groove (11), of the rotating object to be monitored in a flush or sunk fashion.

12. Arrangement according to claim 11, **characterized by** the utilization of a common reader-side transmitting and receiving antenna in combination with a directive element, which is preferably integrated into the reader and serves for separating transmitted signals and received sensor signals.

13. Arrangement according to claim 11, **characterized by** the utilization of two separate antennas as reader-side transmitting and receiving antenna.

14. Arrangement according to at least one of claims 11 to 13, **characterized in that** the used antennas and the surface acoustic wave sensor element of the reflective delay-line type ("reflective delay-line type SAW sensor element") are designed for operating in the clear ISM-band of 2.40-2.50 GHz.

15. Arrangement according to one of claims 11 to 14 for carrying out measurements with several surface acoustic wave sensor elements, **characterized in that** at least two sensors are used and arranged in such a way that they sequentially pass through the transmitting/receiving area of the reader, wherein the reading areas do not mutually overlap during this process.

16. Arrangement according to claim 11 for measuring the temperature in the interior of a rotating object of an electric machine, **characterized in that** the signal-generating surface acoustic wave sensor element of the reflective delay-line type ("reflective delay-line type SAW sensor element") and the associated sensor-side antenna are arranged in a spatially separated fashion such that the signal-generating element is located at the desired measuring point in the interior of a short-circuit armature and electrically connected to the sensor-side antenna, which is arranged at an adequately radio-accessible location, in a suitable fashion, preferably by means of a coaxial conductors.

## Revendications

1. Procédé de mesure sans contact de grandeurs physiques sur des pièces en mouvement à l'intérieur de machines électriques,
lors duquel il est utilisé au moins un élément acoustique capteur d'ondes superficielles du type ligne à retard réflectrice (« reflective delayline type SAW sensor element »), avec au moins deux, de préférence trois marques réfléchissantes, dont au moins l'une fait office de marque de référence et au moins une deuxième fait office de marque de mesure pour la grandeur physique qui doit être mesurée et au passage du capteur, l'élément acoustique capteur d'ondes superficielles du type ligne à retard réflectrice (« reflective delayline type SAW sensor element ») étant lu par une zone de lecture localisée dans l'espace, formée par un chevauchement temporal de la zone émettrice/réceptrice d'une antenne placée côté capteur par un signal radar (FMWC) à trait continu continuellement modulé en fréquence, d'une durée ≤ 1000 µs, de préférence ≤ 100 µs, **caractérisé en ce que** la mesure est déclenchée par un signal de déclenchement (41) qui est en corrélation de position connue avec la ou les antennes placée(s) côté capteur, à savoir l'antenne fendue, de telle sorte que pendant le passage d'un élément capteur par la zone de lecture localisée, il s'effectue au moins un cycle de lecture complet dont les données sont évaluées par la suite.

2. Procédé selon la revendication 1, **caractérisé en ce que** les grandeurs physiques mesurées sont des températures, un (des) couple(s) de rotation et/ou une (des) tension(s) mécaniques.

3. Procédé selon la revendication 1 ou 2, **caractérisé en ce que** les machines électriques sont des moteurs électrique monophasés ou biphasés ou des générateurs monophasés ou biphasés.

4. Procédé selon la revendication 3, **caractérisé en ce que** les machines électriques présentent une puissance nominale supérieure ou égale à 100 kW.

5. Procédé selon la revendication 3 ou 4, **caractérisé en ce que** les données de mesure du capteur obtenues sont utilisées en temps réel pour la supervision et/ou la régulation de la machine électrique.

6. Procédé selon l'une quelconque des revendications 1 à 5, **caractérisé en ce qu'**il s'effectue une interrogation permanente du capteur et **en ce que** lors d'une étape de post-processus, les données de mesure du capteur obtenues par la zone de lecture lors du passage de l'antenne placée côté capteur sont séparées des données d'arrière-plan obtenues pendant des périodes où aucun élément capteur n'est présent dans la zone de lecture et évaluées.

7. Procédé selon la revendication 1, **caractérisé en ce que** pendant un passage d'un élément capteur par la zone de lecture localisée, il s'effectue deux cycles de mesure ou plus, dont les données sont ensuite amenées en corrélation de manière connue et évaluées.

8. Procédé selon la revendication 1, **caractérisé en ce qu'**en supplément, au moins un cycle de mesure est déclenché à un moment pendant lequel aucun élément capteur ne se trouve dans la zone de lecture et **en ce que** les données ainsi récupérées sont utilisées pour la correction des interférences.

9. Procédé selon la revendication 1, **caractérisé en ce que** les éléments acoustiques capteurs d'ondes superficielles du type ligne à retard réflectrice (« reflective delayline type SAW sensor element ») comportent chacun au moins trois, de préférence de quatre à dix marques réfléchissantes qui sont placées sur l'élément SAW, de sorte à donner lors du processus de lecture un code d'identification différent d'un élément SAW à l'autre élément SAW, qui en commun avec les données de mesure du capteur est lu par un signal radar (FMWC) à trait continu continuellement modulé en fréquence, d'une durée ≤ 1000 µs, de préférence ≤ 100 µs.

10. Procédé selon la revendication 9, **caractérisé en ce que** les codes d'identification sont utilisés pour l'affectation de données de calibrage pour des capteurs SAW individuels et/ou en tant que caractéristiques de sécurité difficilement falsifiables, par exemple pour la surveillance d'une garantie et/ou comme base pour la maintenance de l'installation.

11. Agencement destiné à la mesure sans contact de grandeurs physiques sur des pièces en mouvement à l'intérieur de machines électriques,
dans lequel il est prévu au moins un élément acoustique capteur d'ondes superficielles du type ligne à retard réflectrice (« reflective delayline type SAW sensor element »), avec au moins deux, de préférence trois marques réfléchissantes, lequel est monté sur un composant en mouvement ou en rotation qui doit être supervisé ou intégré dans celui-ci et lequel est raccordé électriquement sur une antenne émettrice/réceptrice placée côté capteur, également intégrée dans le composant et un agencement émetteur/récepteur électriquement connecté avec un lecteur étant prévu, qui par chevauchement des zones émettrices/réceptrices concernées forme en commun une zone de lecture localisée dans l'espace, lors de la traversée de laquelle chaque élément capteur est lu par un signal radar (FMWC) à trait continu continuellement modulé en fréquence, d'une durée ≤ 1000 µs, de préférence ≤ 100 µs, **caractérisé en ce que** l'antenne placée côté capteur est réalisée sous la forme d'une antenne fendue (201) et **en ce que** la marque de capteur (22) est globalement conçue de sorte à être intégrée à fleur ou également noyée dans un creux, par exemple une rainure axiale, de préférence, une rainure d'équilibrage (11) de l'objet en rotation qui doit être supervisé.

12. Agencement selon la revendication 11, **caractérisé par** l'utilisation d'une antenne émettrice et réceptrice commune, placée côté lecteur, en association avec un élément directif, de préférence intégré dans le lecteur, pour la séparation de signaux émis et de signaux réceptionnés par le capteur.

13. Agencement selon la revendication 11, **caractérisé par** l'utilisation de deux antennes séparées en tant qu'antenne émettrice ou réceptrice placée côté lecteur.

14. Agencement selon au moins l'une quelconque des revendications 11 à 13, **caractérisé en ce que** les antennes utilisées et l'élément acoustique capteur d'ondes superficielles du type ligne à retard réflectrice (« reflective delayline type SAW sensor element ») sont dimensionnées pour un fonctionnement sur la bande ISM de 2,40 à 2,50 GHz.

15. Agencement selon l'une quelconque des revendications 11 à 14 dans une forme de réalisation destinée à mesurer avec plusieurs éléments capteurs d'ondes superficielles, caractérisé en qu'au moins deux capteurs sont utilisés et placés de sorte à traverser de manière séquentielle la zone émettrice/réceptrice du lecteur, de telle sorte que les zones de lecture ne se recoupent pas mutuellement à cet effet.

16. Agencement selon la revendication 11 dans une forme de réalisation destinée à mesurer la température à l'intérieur d'un objet en rotation d'une machine électrique, **caractérisé en ce que** l'élément acoustique capteur d'ondes superficielles du type ligne à retard réflectrice (« reflective delayline type SAW sensor element ») et l'antenne placée côté capteur qui lui est associée sont placés séparément dans l'espace, de sorte que l'élément délivrant le signal se trouve sur le point de mesure souhaité à l'intérieur d'un rotor en court-circuit et soit électriquement connecté de manière adaptée, de préférence à l'aide d'un conducteur coaxial avec l'antenne côté capteur, placée en un endroit adapté, accessible par radio.
